# EUROPÄISCHE PATENTANMELDUNG

(11) **EP 0 679 563 A1**
(43) Veröffentlichungstag der Anmeldung: **02.11.1995**
(21) Anmeldenummer: 95101890.2
(22) Anmeldetag: 13.02.1995
(51) Int. Cl.: B62D 11/20

(54) **Selbstfahrende Erntemaschine, insbesondere Mähdrescher**

(30) Priorität: 30.04.1994 DE 4415247
(71) Anmelder: CLAAS Kommanditgesellschaft auf Aktien, 33428 Harsewinkel (DE)
(72) Erfinder: Jennen, Wolfgang, D-3330 Gütersloh (DE)

(57) **Zusammenfassung**

Die Erfindung betrifft eine selbstfahrende Erntemaschine (1), deren Fahrwerk aus zwei Halbraupen vorn (2) sowie einer einzelnen lenkbaren Halbraupe hinten (3) besteht.

## Beschreibung

Gewöhnlich werden Fahrwerke von selbstfahrenden Erntemaschinen mit vier Rädern konstruiert, wobei zumeist die vorderen Räder angetrieben und die hinteren Räder lenkbar sind. Die wachsenden Maschinengrößen und damit einhergehend die zunehmende Masse der Erntemaschinen haben jedoch auf die Bodenverdichtung und Traktion der Maschinen einen negativen Einfluß. So werden heute größere selbstfahrende Erntemaschinen häufig mit Allradantrieb versehen, um eine ausreichende Traktion zu gewährleisten. Um der zunehmenden Bodenverdichtung zu begegnen, setzt man heute zunehmend breitere, beispielsweise sogenannte "Terra"-Reifen oder Zwillingsreifen ein.

Es ist jedoch schwierig, mit einem Reifenfahrwerk eine optimale Balance eines Mähdreschers zu erreichen, da zum einen aufgrund des angehängten Schneidwerkes, des Dreschwerkes und des Fahrerstand der Schwerpunkt der Maschine eher vorn liegt, zusätzlich aber durch die Befüllung des obenliegenden Korntanks der Schwerpunkt der Maschine nach oben wandert und sich je nach Schüttung innerhalb des Korntanks zusätzlich in Längs- und Querrichtung verschieben kann. Arbeitet der Mähdrescher in Hanglagen, muß eine Seite des Fahrwerks einen größeren Teil der Antriebs- und Lenkkräfte übertragen. Bei der Arbeit von Mähdreschern, aber auch anderen selbstfahrenden Erntemaschinen in Hanglagen werden also die Probleme der Balance, Traktionen und Bodenverdichtung zusätzlich verschärft.

In besonders feuchten Bodenverhältnissen wie z.B. bei der Reisernte oder auf moorigen Böden werden heute bei Mähdreschern anstelle der Vorderräder kurze sogenannte Halbraupen, eingesetzt. Seltener wird auch das komplette Radfahrwerk durch ein Vollraupensystem ersetzt. Während sich die Vollraupen vor allem aufgrund ihrer hohen Kosten bisher nicht durchsetzen konnten, haben sich die bekannten Halbraupenfahrwerke mit Halbraupen nur an der Vorderachse aufgrund bisher ungelöster Nachteile nicht weiter verbreiten können. Fahrkomfort und -geschwindigkeit lassen sich neuerdings durch Verwendung von Gummilaufbändern anstelle der bisher verwandten Stahlketten erhöhen. Insbesondere die Lenkung über die bereifte Hinterachse bereitet jedoch immer wieder in schwierigen Bodenverhältnissen Probleme. So können die Hinterräder den Boden weiterhin in unerwünschtem Maße verdichten oder sie sind aufgrund mangelnder Traktion nicht in der Lage, die Lenkkräfte auf den Boden zu übertragen. Für die übrigen selbstfahrenden Erntemaschinen sind außer Rad- oder Vollraupenfahrwerken keine anderen traktionsverbessernden oder bodenverdichtungsvermindernden Fahrwerkskonzepte bekannt.

Aus dem Stand der Technik ist es für Schlepper oder Militärfahrzeuge bekannt, ein Fahrwerk mit einer Halbraupe vorn und zwei Halbraupen hinten einzusetzen.(Siehe DE 461466, US 4729445, DE 593303, DE 3511647) Dieses Fahrwerkskonzept ist für Mähdrescher und auch andere selbstfahrende Erntemaschinen jedoch nicht brauchbar, da die übliche Gewichtsverteilung die Benutzung von nur einer Raupe vorn nicht zuläßt. In DE 309030 ist ein Fahrwerkskonzept mit vier Halbraupen vorgeschlagen, bei dem die hinteren Halbraupen gelenkt werden, das jedoch wegen der Verwendung von vier Halbraupen teuer in der Herstellung ist. Im Stand der Technik sind keine Hinweise zu finden, daß, wo und wie gelenkte Halbraupen bei einer selbstfahrenden Erntemaschine hinten angebaut werden können.

Aufgabe der vorliegenden Erfindung ist es, ein Fahrwerkskonzept für Mähdrescher aufzuzeigen, das die Traktions- und Bodenverdichtungsprobleme bekannter Fahrwerke vermindert, ohne dadurch allzu hohe zusätzliche Kosten zu verursachen.

Die Aufgabe wird durch ein Fahrwerk gelöst, das aus zwei Halbraupen vorn und einer gelenkten Halbraupe hinten besteht. Die Anordnung von zwei Halbraupen vorn ist erforderlich, um bei einem in der vorderen Maschinenhälfte liegenden Maschinenschwerpunkt eine ausreichende Seitenstabilität zu gewährleisten. Aufgrund der vor allem in Längsrichtung der Maschine vergrößerten Aufstandsfläche verringert sich die Empfindlichkeit gegen Schwerpunktverlagerungen in der Maschine, wie sie z. B. durch die Befüllung des Korntankes verursacht wird. Ein weiterer Vorteil einer verlängerten Aufstandsfläche ist darin zu sehen, daß die selbstfahrende Erntemaschine weniger empfindlich auf Bodenunebenheiten reagiert, geringer um die Querachse schwankt und dementsprechend automatische Höhenregelungen für Vorsatzgeräte weniger durch Regelvorgänge belastet werden. Ist keine automatische Höhenregelung vorhanden, wird der Fahrer entlastet, da er weniger auf die optimale Höhenführung des Vorsatzgerätes achten muß. Da die Halbraupen flacher bauen als die herkömmlichen Reifen, ist es auch möglich, den Maschinenschwerpunkt insgesamt abzusenken und dadurch ebenfalls die Kippsicherheit der Maschine zu erhöhen. Durch die beschriebene Verbesserung der Standsicherheit von Maschinen durch Verwendung von Halbraupen wird es möglich, die beiden gelenkten Reifen an der Hinterachse durch eine gelenkte Halbraupe zu ersetzen, ohne die Standsicherheit der Maschine erheblich zu gefährden.

Die im Vergleich zu den Reifen um ein Vielfaches vergrößerte Aufstandsfläche der Halbraupe hinten verursacht, wie schon die an der Vorderachse angebrachten Halbraupen, eine deutlich verringerte Bodenverdichtung. Gleichzeitig kann die hintere gelenkte Halbraupe aufgrund der größeren Aufstandsfläche höhere Lenkkräfte und - soweit die hintere Halbraupe auch angetrieben ist - höhere Zugkräfte übertragen. Das beschriebene Fahrwerkskonzept kann die erwünschten Vorteile kostengünstiger als die bisher bekannten Raupenfahrwerksysteme verwirklichen, da insgesamt nur drei Halbraupenmodule für dieses Konzept benötigt werden.

Um den besonderen Einsatzverhältnissen von Mähdreschern gerecht zu werden, müssen bei der Anordnung der hinteren Halbraupe bestimmte Bedingungen beachtet werden. So ist darauf zu achten, daß durch die Verwendung einer Halbraupe hinten die Schwadablage des ausgedroschenen Strohs nicht beeinträchtigt werden darf. Dementsprechend sollte das hintere Ende der Halbraupe nicht über das hintere Ende der Schüttler hinaus stehen, wenn man den Einbau einer Leitvorrichtung zur günstigen Umlenkung des Strohflusses vermeiden will. Auch die Funktion des Strohhäckslers darf durch die Halbraupe nicht beeinträchtigt werden. Um eine Verschmutzung des Laufbandes und der hierfür vorgesehenen Steuerelemente durch Spreu zu vermeiden, ist es vorteilhaft, das Ende der Halbraupe noch vor dem Ende der Mähdreschersiebe anzuordnen. Soweit das aufgrund fehlenden Bauraumes oder aus Balance-Gründen nicht möglich ist, kann die Spreu auch durch ein über der Halbraupe angeordnetes Transportband oder sonstige Tranportmittel über das hinausragende Halbraupenende hinweg geführt werden. Dabei bietet es sich an, die Spreu über eine Verteileinrichtung zusammen mit dem ausgedroschenen Stroh über die Arbeitsbreite des Mähdreschers hinweg abzulegen.

Es ist zudem vorteilhaft, die Module der Halbraupen so auszubilden, daß sie mit möglichst geringem Montageaufwand gegen ein Reifenfahrwerk ausgetauscht werden können. Bei wechselnden Einsatzbedingungen, Wartungs- oder Reparaturarbeiten an den Halbraupen ist es dann möglich, die entsprechenden Umbauten schnell mit geringem Aufwand durchzuführen und eine Maschine so ohne große Einschränkungen im Einsatz zu halten. Das ist besonders leicht, wenn die hintere Halbraupe bei einer gegebenen Maschine an den gleichen Aufhängungspunkten angebaut wird wie eine herkömmliche Achse mit gelenkten Reifen.

Als stabiler Aufhängungspunkt bietet sich bei einem Mähdrescher die untere Quertraverse am hinteren Ende des Maschinenrahmens an. Um eine möglichst geringe Bauhöhe der hinteren Halbraupeneinheit einschließlich Aufhängung und Lenkmitteln realisieren zu können, ist es vorteilhaft, die untere Quertraverse am hinteren Ende des Maschinenrahmens horizontal auf einer Höhe anzuordnen mit dem Schwenkgelenk, um das das Halbraupenmodul zu Lenkzwecken gedreht wird, und der oberen Quertraverse des Halterahmens für das Halbraupenmodul. An der in Fahrtrichtung gesehen hinteren Seite der Quertraverse des Halterahmens für das Halbraupenmodul ließe sich dann eine Anhängevorrichtung für beispielsweise Schneidwerkswagen anbringen. Bei der hier vorgeschlagenen bauhöhensparenden Anbringung des Halbraupenmoduls ist es möglich, Platz für Stroh- und Spreu-Verteil- und Ablageeinrichtungen, die unterhalb der Trenn- und Reinigungseinrichtungen angebracht werden sollen, zu bekommen, indem der senkrecht stehende seitliche Träger des Halterahmens für die Halbraupe in Fahrtrichtung nach vorn geschwungen ausgebildet wird. Dadurch können bei einer gegebenen Länge einer Halbraupe die Aufhängungspunkte der Halbraupe selbst am Halterahmen in Fahrtrichtung gesehen weiter vorn plaziert werden, wobei infolge des Vorrückens der Halbraupe hinter der Halbraupe ein größerer Freiraum entsteht, der dann für Verteil- und Ablageeinrichtungen genutzt werden kann.

Um auch bei der hinteren Halbraupe eine optimale Bodendruckverteilung sowie einen akzeptablen Fahrkomfort zu erreichen, muß die hintere Halbraupe um eine Querachse drehbar gelagert werden. Dadurch, daß das hintere Halbraupenmodul durch Pendelbewegungen Bodenunebenheiten ausweichen kann, wird vermieden, daß sich der Bodenkontakt im ungünstigsten Fall auf die Fläche einer kleinen über die übrige Bodenfläche hinausstehenden Erhebung beschränkt und das Überfahren einer solchen Unebenheit vom Fahrer als unangenehmer vertikaler Stoß empfunden wird.

Bei einer einzelnen gelenkten Halbraupe muß die Anlenkung der Halbraupe anderes gelöst werden als bei den bekannten Achsfahrwerken. Zu beachten ist, daß die zu übertragenden Kräfte, die erforderlich sind, um den Einschlagwinkel einer Halbraupe zu verändern, weitaus größer sind als diejenigen, die für den Einschlag eines Luftreifens aufgewendet werden müssen. Als stabile Lösung bietet sich an, den um eine Hochachse schwenkbaren Tragrahmen des Halbraupenlaufwerks direkt über einen doppeltwirkenden oder zwei einfache Hydraulikzylinder mit dem Mähdrescherrahmen zu verbinden und über die Arbeitswege der Hubzylinder die Lenkkräfte zu übertragen. Es wäre auch möglich, den Tragrahmen mit einem Drehkranz zu versehen und die Lenkkräfte über ein Schneckengetriebe oder Zahnrad, das auf die Verzahnung des Drehkranzes wirkt, vom Maschinenrahmen auf das Halbraupenlaufwerk zu übertragen.

Um die Bodenverdichtung und die Traktion zusätzlich zu verbessern, wird vorgeschlagen, daß einzelne Raupenlaufband der hinteren gelenkten Halbraupe durch ein Zwillingslaufband zu ersetzen.

Ein Ausführungsbeispiel der Erfindung ist in der Zeichnung dargestellt und wird im Folgenden näher bezeichnet. Es zeigen
- Figur 1:: einen Mähdrescher mit erfindungsgemäßem Fahrwerk in der Seitenansicht,
- Figur 2:: einen erfindungsgemäßen Mähdrescher aus der Sicht von oben,
- Figur 3:: die Ausbildung des hinteren gelenkten Halbraupenmoduls mit einer Zwillingsraupe.

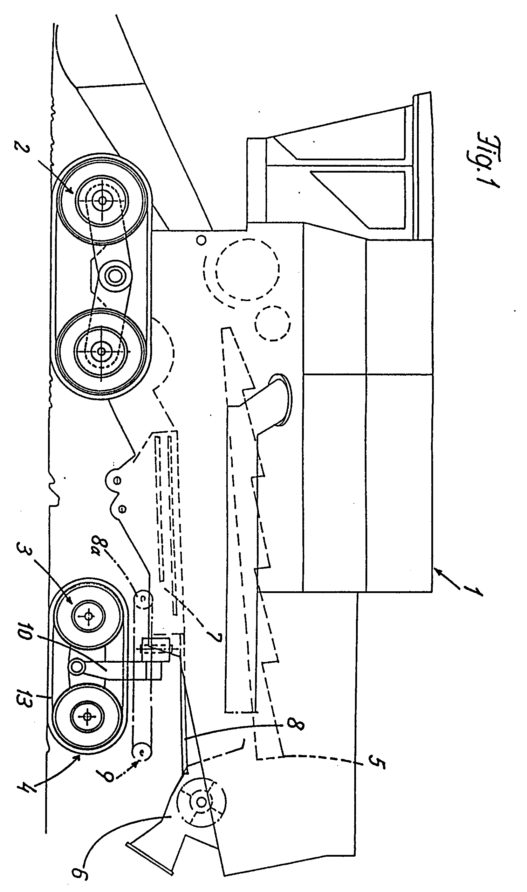

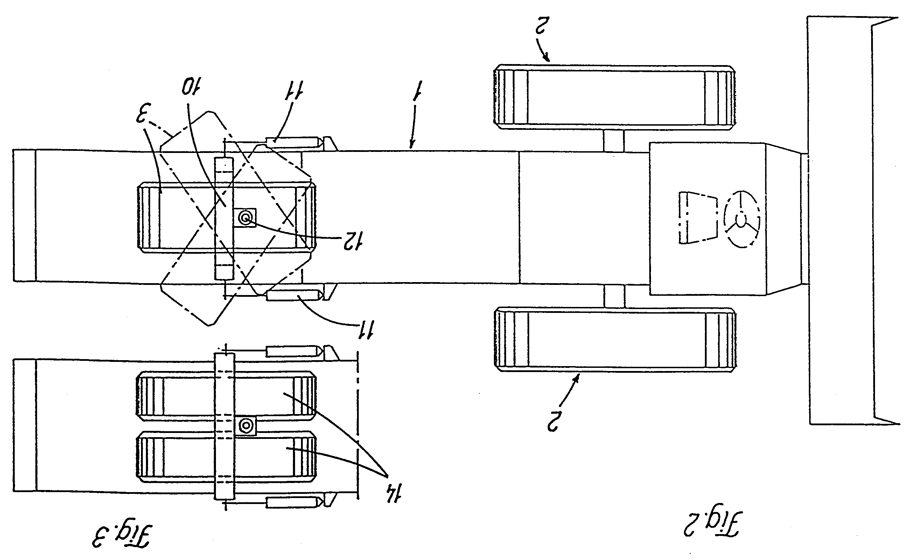

An den Mähdrescher 1 ist anstelle eines Vorderrades eine aus zwei Umlenkrädern und einem darum umlaufenden Endlosband bestehende Halbraupe 2 angebaut. Anstelle einer Hinterachse stützt sich der Mähdrescher 1 hinten auf eine mittig angeordnete und gleich aufgebaute Halbraupe 3 ab. Das hintere Ende 4 der Halbraupe 3 befindet sich vor dem Ende der Trenneinrichtung 5 sowie einer Verteileinrichtung 6. Das Abgabeende der Siebeinrichtung 7 befindet sich zwar vor dem Ende der hinteren Halbraupe 4, durch ein wahlweise einsetzbares Stufenblech 8 oder ein Transportband 8a dessen hinteres Ende 9 über das Ende des Laufbandes 4 hinausragt, wird jedoch vermieden, daß der Spreuabgang auf das Laufband sowie dessen Trag- und Lenkeinrichtung fällt und dort zu unerwünschten Verschmutzungen und Störungen führen kann. Der Tragrahmen 10 des Halbraupenlaufwerks 3 kann angelenkt werden durch eine doppeltwirkende oder zwei einfachwirkende Kolbenzylindereinheiten 11, die durch Ein- und Ausfahren ein Verschwenken des Tragrahmens 10 um die Schwenkachse 12 bewirken. Anstelle eines einzelnen Laufbandes 13 kann das hintere Halbraupenlaufwerk 3 auch aus einem Zwillingslaufwerk mit zwei Endlosbändern 14 bestehen.

## Patentansprüche

1. Selbstfahrende Erntemaschine,
**dadurch gekennzeichnet**,
daß das Fahrwerk aus zwei feststehenden Halbraupen (2) vorn und einer lenkbaren Halbraupe (3) hinten gebildet wird.

2. Selbstfahrende Erntemaschine nach Anspruch 1,
**dadurch gekennzeichnet**,
daß das hintere Ende (4) der lenkbaren Halbraupe (3) in Fahrtrichtung gesehen vor dem Abgabeende (5) der Trenneinrichtung liegt.

3. Selbstfahrende Erntemaschine nach Anspruch 1,
**dadurch gekennzeichnet**,
daß das hintere Ende (4) der gelenkten Halbraupe (3) in Fahrtrichtung gesehen vor dem Gehäuse des Strohhäckslers liegt.

4. Selbstfahrende Erntemaschine nach Anspruch 1,
**dadurch gekennzeichnet**,
daß das hintere Ende (4) der gelenkten Halbraupe (3) in Fahrtrichtung gesehen vor dem Auswurfende des Siebkastens liegt.

5. Selbstfahrende Erntemaschine nach Anspruch 2 oder 3,
**dadurch gekennzeichnet**,
daß die Spreu vom Abgabeende des Siebkastens durch an sich bekannte Transport- und Leitmittel hinter das Ende der hinteren lenkbaren Halbraupe (3) verbracht und von dort auf den Boden abgelegt wird oder über eine bewegte Fördereinrichtung (8) einer Verteileinrichtung (6) zugeführt wird, die in Fahrtrichtung gesehen hinter dem Ende (4) der gelenkten Halbraupe (3) angebracht ist.

6. Selbstfahrende Erntemaschine nach einem der Ansprüche 1 bis 5,
**dadurch gekennzeichnet**,
daß das hintere gelenkte Halbraupenmodul (3) an den gleichen Aufhängungspunkten eines Mähdrescherrahmens aufgehängt wird wie eine ebenfalls an den Mähdrescherrahmen anbaubare herkömmliche gelenkte Achse.

7. Selbstfahrende Erntemaschine nach einem der Ansprüche 1 bis 6,
**dadurch gekennzeichnet**,
daß das gelenkte hintere Halbraupenmodul (3) an einer Quertraverse am hinteren unteren Ende des Rahmens der selbstfahrenden Erntemaschine befestigt wird.

8. Selbstfahrende Erntemaschine nach Anspruch 7,
**dadurch gekennzeichnet**,
daß die Quertraverse des Tragrahmens (10) für das Halbraupenmodul (3) sich horizontal auf einer Höhe befindet mit der Quertraverse am hinteren unteren Ende des Rahmens der selbstfahrenden Erntemaschine und dem Lenkgelenk, um dessen Schwenkachse das Halbraupenmodul zu Lenkzwecken gedreht wird.

9. Selbstfahrende Erntemaschine nach Anspruch 8,
**dadurch gekennzeichnet,** daß die Quertraverse des Tragrahmens (10) für das Halbraupenmodul (3) in Fahrtrichtung gesehen hinter der Schwenkachse des Halbraupenmoduls liegt.

10. Selbstfahrende Erntemaschine nach einem der Ansprüche 7 bis 9,
**dadurch gekennzeichnet**, daß an der Quertraverse des Tragrahmens (10) für das
Halbraupenmodul (3) eine Anhängevorrichtung angebracht ist.

11. Selbstfahrende Erntemaschine nach einem der Ansprüche 7 bis 10,
**dadurch gekennzeichnet**,
daß der seitliche, senkrecht stehende Träger des Halterahmens (10) für das Halbraupenmodul (3) in Fahrtrichtung gesehen nach vorn geschwungen ausgebildet ist und dadurch die Aufhängungspunkte der hinteren Halbraupe nach vorn vorverlagert sind.

12. Selbstfahrende Erntemaschine nach einem der Ansprüche 1 bis 11,
**dadurch gekennzeichnet**,
daß die Halbraupe des Halbraupenmoduls (3) schwenkbar um eine Querachse in dem Halterahmen (10) gelagert ist.

13. Selbstfahrende Erntemaschine nach einem der Ansprüche 1 bis 7,
**dadurch gekennzeichnet**,
daß die Lenkkräfte über eine doppeltwirkende oder zwei einfachwirkende Kolbenzylindereinheiten (11) vom Mähdrescherrahmen auf den Tragrahmen des Halbraupenmoduls (10) über die Arbeitswege der Zylindereinheit übertragen werden.

14. Selbstfahrende Erntemaschine nach einem der Ansprüche 1 bis 8,
**dadurch gekennzeichnet**,
daß die Lenkkräfte vom Mähdrescherrahmen über ein angetriebenes Zahnrad oder Schneckengetriebe auf einen mit dem Tragrahmen des hinteren Halbraupenmoduls (3) verbundenen Zahnkranz übertragen werden.

15. Selbstfahrende Erntemaschine nach einem der Ansprüche 1 bis 9,
**dadurch gekennzeichnet**,
daß die hintere Halbraupe (3) über einen eigenen Antrieb für das Endlosband verfügt.
